# EUROPEAN PATENT APPLICATION

(11) **EP 2 757 709 A1**
(43) Date of publication of application: **23.07.2014**
(21) Application number: 13305073.2
(22) Date of filing: 21.01.2013
(51) Int. Cl.: H04B 10/67, G02F 3/02, H04J 14/02

(54) **Low cost optical filter for bidirectional optical subassembly**

(71) Applicant: Alcatel Lucent, 75007 Paris (FR)
(72) Inventor: Pöhlmann, Wolfgang, 71282 Hemmingen (DE)
(74) Representative: MERH-IP Matias Erny Reichl Hoffmann

(57) **Abstract**

The present document relates to passive optical networks (PON). In particular, the present document relates to an optical filter for Wavelength Division Multiplex (WDM) PONs. A Receiver Optical Subassembly (ROSA) for a WDM-PON ONU (151, 152) is described. The ROSA comprises a downstream filter (170) configured to isolate a first optical downstream signal (182) at a first downstream wavelength from an optical WDM downstream signal (183) comprising a plurality of downstream wavelengths. The downstream filter (170) comprises a first reflective plate (203) configured to let pass the optical WDM downstream signal (183) in a first propagation direction, and configured to reflect the optical WDM downstream signal (183) in a second propagation direction. The second propagation direction is opposite to the first propagation direction. Furthermore, the downstream filter (170) comprises a second reflector (202, 221) configured to reflect the optical WDM downstream signal (183) in the first propagation direction. The first reflective plate (203) and the second reflector (202, 221) form a resonator cavity having an optical path length (231). In addition, the downstream filter (170) comprises path length modification means configured to modify the optical path length (231) of the resonator cavity to adjust a pass band of the downstream filter (170) to the first downstream wavelength. The ROSA further comprises a photodetector (162) configured to convert the first optical downstream signal (182) into an electrical signal.

## Description

The present document relates to passive optical networks (PON). In particular, the present document relates to an optical filter for Wavelength Division Multiplex (WDM) PONs.

Wavelength Division Multiplex PONs (WDM-PONs) are currently under investigation for increasing the capacity of PON systems. The multiple wavelengths of a WDM-PON can be used to separate individual or groups of Optical Network Units (ONUs) into several virtual PONs co-existing on the same physical infrastructure. Typically, one wavelength (e.g. in the range of 1575-1580nm) of the WDM system is used for the downstream communication from a central office OLT (optical line terminal) to one or more ONUs, and another wavelength (e.g. in the range of 1260-1280nm) of the WDM system is used for the upstream communication from the one or more ONUs to the OLT. The downstream and upstream communication may be performed on the same or on separate fibers.

Next Generation (NG) PON2 systems are expected to use 4 or 8 downstream wavelengths with a data-rate of 10Gbit/s on each wavelength. The downstream signals are typically TDM (Time Division Multipex) signals for a plurality of different ONUs. Hence, NGPON2 systems provide a total downstream data-rate of 40 or 80 Gbit/s, which is shared among a plurality of ONUs. The total data-rate on the downstream link is time and wavelength division multiplexed (TWDM), meaning that an individual ONU selects its data by first selecting one of the plurality of wavelengths comprised in the downstream WDM signal, thereby yielding a TDM signal on a single wavelength carrier and by then selecting a particular time slot from the TDM signal.

Hence, at the ONU, one wavelength of the plurality of wavelengths has to be filtered out optically. In order to be able to provide low cost ONUs, the optical selection of one of the plurality of wavelengths should be performed with very low cost and with sufficient suppression of the other unwanted wavelength carriers.

According to an aspect a Receiver Optical Subassembly (ROSA) is described. The ROSA may be used as a component of an Optical Network Unit (ONU) of a WDM-PON. In particular, a ROSA and a so called Transmitter OSA (TOSA) may be used to form a Bidirectional OSA (BOSA) for an ONU.

The ROSA may comprise a downstream filter configured to isolate a first optical downstream signal at a first downstream wavelength from an optical WDM downstream signal comprising a plurality of downstream wavelengths. The optical WDM downstream signal may be received at the ROSA from an OLT (Optical Line Terminal) of the WDM-PON. The optical WDM downstream signal may have been de-multiplexed from a bi-directional optical fiber carrying an upstream signal (from the ONU to the OLT) and the optical WDM downstream signal (from the OLT to the ONU). The de-multiplexing may be performed using an upstream / downstream filter comprised within the BOSA.

The downstream filter may comprise a first reflective plate configured to let pass the optical WDM downstream signal in a first propagation direction (e.g. the downstream direction), and configured to reflect the optical WDM downstream signal in a second propagation direction (e.g. the upstream direction). The second propagation direction may be opposite to the first propagation direction. In particular, the first reflective plate may comprise a reflective surface facing a second reflector of the downstream filter. The second reflector may be configured to reflect the optical WDM downstream signal in the first propagation direction (e.g. due to a reflective surface of the second reflector, facing the first reflective plate). The first reflective plate and the second reflector may form a resonator cavity having an optical path length. The optical path length may be dependent on the physical length of the resonator cavity and/or on the refractive index of the material which the optical signal is traversing within the resonator cavity.

The optical path length typically defines the wavelength of the pass band of the downstream filter. As such, the downstream filter may comprise path length modification means configured to modify the optical path length of the resonator cavity to adjust a pass band of the downstream filter to the first downstream wavelength. The path length modification means may comprise a piezo actuator and the optical path length of the resonator cavity may be modified by applying a voltage to the piezo actuator.

Furthermore, the ROSA may comprise a photodetector configured to convert the first optical downstream signal into an electrical signal. The first optical downstream signal may exit the downstream filter via the second reflector and fall onto the photodetector. The photodetector may comprise a photo diode configured to convert optical signals at any of the plurality of downstream wavelengths into the electrical signal. The downstream filter may be configured to isolate any one of the plurality of downstream wavelengths by modifying the optical path length of the resonator cavity. As such, the first downstream wavelength may correspond to any one of the plurality of downstream wavelengths.

Overall, the ROSA may be configured to receive any one of the WDM channels comprised within the optical WDM downstream signal using only a single tunable downstream filter and a single photodetector. By doing this, a cost efficient ROSA and a cost efficient ONU may be provided.

The path length modification means may be configured to move the second reflector towards (and/or away from) the first reflective plate, thereby shortening (and/or increasing) the optical path length. This may be achieved by fixing the second reflector (partially) onto the path length modification means.

By way of example, the second reflector may comprise a second reflective plate which is partially mounted onto the path length modification means. The path length modification means may be arranged between the second reflective plate and the photodetector. In particular, the photodetector may be arranged downstream of the path length modification means which may be arranged downstream of the second reflector (with respect to the downstream propagation direction of the optical WDM downstream signal). The second reflective plate may be fixed onto the path length modification means such that the first optical downstream signal exiting the resonator cavity via the second reflective plate is not blocked by the path length modification means. The path length modification means may be configured to move the second reflective plate towards and/or away from the first reflective plate.

In another example, the second reflector may comprise a reflective coating of the photodetector. In other words, the second reflector may be implemented as a reflective coating on top of the photodetector. The path length modification means may be arranged to move the photodetector comprising the reflective coating towards and/ or away from the first reflective plate. In particular, the photodetector comprising the reflective coating may be fixed on top of the path length modification means.

Alternatively or in addition, the path length modification means may be configured to insert a dielectric component of varying width and/or of varying refractive index into the resonator cavity. The dielectric component may have a refractive index which allows the downstream filter to be tuned to any of the plurality of downstream wavelengths. The varying width and/or the varying refractive index of the dielectric component modify the optical path length of the resonator cavity. As such, the path length modification means may be configured to insert a different width of the dielectric component into the optical path within the resonator cavity, thereby varying the optical path length of the resonator cavity. By way of example, the dielectric component may have a triangular shape and the path length modification means may be configured to insert the triangular shaped dielectric component more or less deeply into the resonator cavity, thereby varying the width of the dielectric component. It should be noted that the dielectric component may have other shapes than a triangular shape. The shape of the dielectric component may be such that the varying width of the dielectric component allows for adjusting the pass band of the downstream filter to the first downstream wavelength (e.g. to any of the plurality of downstream wavelengths which are to be received by the ROSA).

According to a further example, a Bidirection Optical Subassemly (BOSA) is described. The BOSA may comprise a TOSA and a BOSA. The TOSA may comprise a laser (e.g. a laser diode) configured to emit an optical upstream signal at an upstream wavelength. The ROSA may be configured as described in the present document. In particular, the ROSA may be configured to isolate an optical downstream signal at a first downstream wavelength from a WDM downstream signal comprising a plurality of downstream wavelengths. The upstream wavelength may lie in the wavelength range 1260 to 1280nm and/or the plurality of downstream wavelengths may lie in the wavelength range 1575 to 1580nm.

Furthermore, the BOSA may comprise an upstream / downstream filter configured to separate and/or merge the optical upstream signal and the WDM downstream signal. The upstream / downstream filter may be configured to let pass the optical upstream signal propagating in an upstream direction. In addition, the upstream / downstream filter may be configured to reflect the WDM downstream signal propagating in a downstream direction. The WDM downstream signal may be reflected such that it propagates towards the photodetector of the ROSA. This may be achieved e.g. by implementing the upstream / downstream filter as a plate which is arranged at a 45 degrees angle and which comprises a reflective surface configured to reflect the WDM downstream signal. As indicated above, the downstream direction may be opposite to the upstream direction.

According to another aspect, an Optical Network Unit (ONU) for a WDM-PON is described. The ONU comprises a fiber interface configured to receive a drop fiber of the WDM-PON. The drop fiber is typically configured to carry an optical WDM downstream signal in a downstream propagation direction and an optical upstream signal in an upstream propagation direction. Furthermore, the ONU comprises a BOSA as described in the present document.

According to another aspect, the use of a Fabry-Perot filter for adjustably isolating a WDM channel from an optical WDM downstream signal in an ONU of a WDM-PON is described. The above mentioned downstream filter may be implemented as a Fabry-Perot filter.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1a illustrates an example WDM-PON architecture;
Fig. 1b illustrates a block diagram of an example Bidirectional Optical Subassembly;
Figs. 2a - 2c illustrate block diagrams of example optical filters for a BOSA; and
Fig. 3 illustrates the wavelength selectivity of an example optical filter.

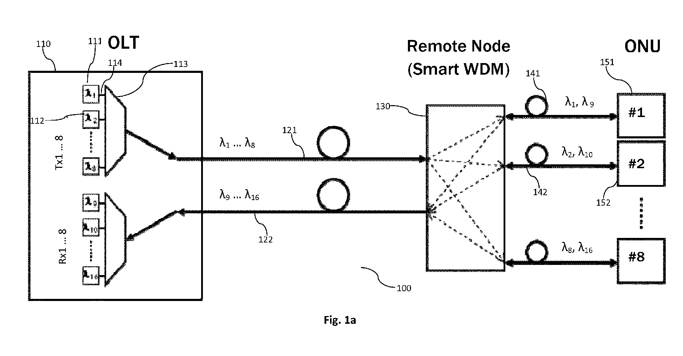

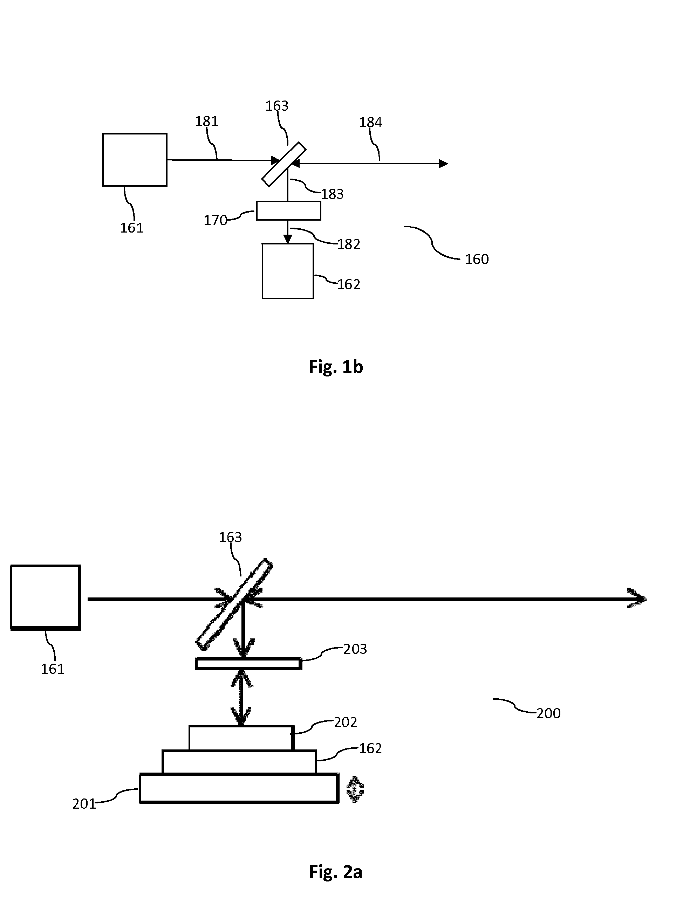

Fig. 1 shows a WDM-PON network 100 comprising an optical line terminal (OLT) 110 and a plurality of optical network units (ONU) 151, 152. In the shown example the network comprises two feeder fibers 121, 122, wherein the first feeder fiber 121 carries the downstream wavelengths λ₁, ..., λ₈ and the second feeder fiber 122 carries the upstream wavelengths λ₉, ..., λ₁₆. It should be noted, however, that the downstream wavelengths λ₁, ..., λ₈ and the upstream wavelengths λ₉, ..., λ₁₆ are preferably carried on a single feeder fiber. In such cases, the PON 100 comprises only a single feeder fiber 121, 122 to and from the OLT 110, wherein the single feeder fiber 121, 122 carries the upstream and the downstream wavelengths. For this purpose, the downstream wavelengths λ₁, ..., λ₈ and the upstream wavelengths λ₉, ..., λ₁₆ may be selected from different wavelength ranges (as indicated below).

Using a remote node 130, the wavelengths may be assigned to particular ONUs 151, 152. Each ONU 151, 152 may be connected to the remote node 130 via a drop fiber 141, 142. In the illustrated example, the wavelengths λ₁ and λ₉ are assigned to a first ONU 151 and the wavelengths λ₂ and λ₁₀ are assigned to a second ONU 152. As such, a WDM-PON network is shown, where each ONU 151, 152 is assigned a dedicated wavelength for the downstream and the upstream communication. In other words, each ONU 151 has a unique set of wavelengths λ₁ and λ₉ for the downstream and upstream communication, respectively.

As indicated in the introductory section, WDM-PONs typically also make use of the broadcasting functionality on the downstream channel and the TDMA (time division multiple access) multiplexing scheme on the upstream channel known from PON systems, e.g. GPON systems. As such, several ONUs 151, 152 may use the same set of wavelengths λ₁ and λ₉ for the downstream and upstream communication.

Furthermore, it is desirable to provide PONs without a remote node 130 configured to perform a wavelength selection for the different ONUs 151, 152. In particular, it is desirable to provide ONUs 151, 152 which are configured to select one of the plurality of downstream wavelengths λ₁, ..., λ₈ using an optical filter. As a result, flexible PONs may be provided without the need of providing and managing a remote node 130.

Fig. 1b shows a block diagram of an example ONU comprising a Bidirectional Optical Subassembly (BOSA) 160. The BOSA 160 comprises a transmission part, referred to as a Transmitter OSA (TOSA) and a reception part, referred to as a Receiever OSA (ROSA). The TOSA comprises a laser 161 configured to transmit an optical upstream signal 181 at a particular upstream wavelength. The ROSA comprises a photodetector (e.g. a photo diode) 162 configured to convert an optical downstream signal 182 into an electrical signal. A bidirectional optical signal 184 (carried e.g. on a drop fiber 141) may be separated / merged using an upstream/downstream filter 163. The upstream / downstream filter 163 is configured to let pass an optical upstream signal 181 at the upstream wavelength (which may e.g. be in the range of 1260 - 1280nm). On the other hand, optical downstream signals 183 at one or more downstream wavelength (which may e.g. be in the range of 1575-1580nm) are reflected. The upstream/downstream filter 163 may be oriented such that the optical downstream signal 183 at the one or more downstream wavelengths is reflected towards the photodetector 162.

The BOSA 160 comprises a downstream filter 170 configured to isolate a particular downstream wavelength from the optical downstream signal 183, thereby providing an optical signal 182 at the particular downstream wavelength. As indicated above, the OLT 110 may transmit an optical WDM signal 121 comprising a plurality of wavelengths λ₁, ..., λ₈. The downstream filter 170 may be configured to isolate one of the plurality of wavelengths λ₁, ..., λ₈, thereby providing an optical signal 182 to the photodetector 162, which comprises only a single wavelength from the plurality of wavelengths λ₁, ..., λ₈..

The downstream filter 170 should be tunable to any one of the plurality of wavelengths λ₁, ..., λ₈, such that the same BOSA 160 may be used for any of the plurality of wavelengths λ₁, ..., λ₈. By doing this, a single type of ONU 151, 152 may be deployed within the WDM-PON (regardless the wavelength used by the particular ONU 151, 152). In order to provide low cost BOSAs 160, the cost of the tunable downstream filter 170 should be low.

In the present document, it is proposed to integrate a free space Fabry-Perot filter 170 in the BOSA 160. The wavelength of the Fabry Perot filter 170 may be tuned mechanically using a piezo actuator. Figs. 2a to 2c show block diagrams of example BOSAs comprising downstream filters 170 which comprise Fabry-Perot filters.

The BOSA 200 of Fig. 2a comprises a first reflective plate 203 which is configured to let pass the optical downstream signal 182 comprising the plurality of downstream wavelengths. Furthermore, the first reflective plate 203 is configured to reflect light propagating in a direction which is opposite to the propagation direction of the optical downstream signal 182. In other words, the first reflective plate 203 is typically transparent in the direction of propagation of the optical downstream signal 182 comprising the plurality of downstream wavelengths and the first reflective plate 203 is typically reflective for optical signals in the opposite direction of propagation. In yet other words, the first reflective plate 203 may comprise a reflective surface which is facing a reflective surface of a second reflector 202, thereby forming a resonator cavity.

The second reflector 202 may e.g. be implemented as a reflective coating on the photodetector 162. As such, the first reflective plate 203 and the second reflector 202 form a Fabry-Perot interferometer, a Fabry-Perot etalon or a Fabry-Perot filter. The transmittance function of the Fabry-Perot filter typically depends on the reflectance of the reflective surfaces of the first reflective plate 203 and the reflective surface of the second reflector 202. In particular, the sharpness of peaks of the transmittance function of the Fabry-Perot filter is typically dependant on the reflectance of the reflective surfaces.

The wavelengths of the peaks of the transmittance function typically depend on the distance between the reflective surfaces of the first reflective plate 203 and of the second reflector 202. In the present document, it is proposed to use a piezo actuator 201 to modify the distance between the reflective surfaces of the first reflective plate 203 and of the second reflector 202, thereby modifying the wavelengths of the peaks of the transmittance function of the Fabry-Perot filter.

In the BOSA 200 of Fig. 2a, the photodetector 162 and the reflective coating 202 are mounted onto the piezo actuator 201. The first reflective plate 203 and the reflective coating 202 form a resonator cavity having a transmittance function with one or more peaks. When applying a voltage to the piezo actuator, the photodetector 162 will move closer to the first reflective plate 203, thereby reducing the length of the resonator cavity, i.e. thereby reducing the wavelength of the peak of the transmittance function.

The downstream filter 170 of Fig. 2a (comprising the first reflective plate 203, the second reflector 202 and the piezo actuator 201) is advantageous, as it may be implemented at relatively low cost and with a relatively low pin count. However, the photodetector 162 is movably mounted onto the piezo actuator 201, which may cause challenges with regards to providing a stable electrical connection to the photodetector 162 (bond wiring to the photodetector 162). Furthermore, the isolation of the photodetector 162 from the relatively high voltages of the piezo actuator 201 may be challenging.

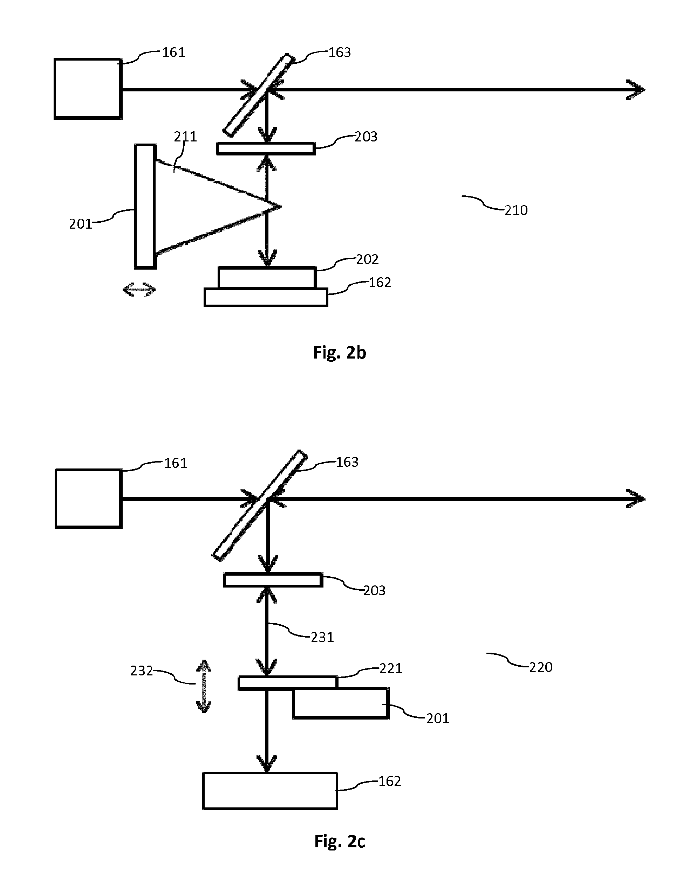

Fig. 2b shows another example of a BOSA 210 comprising a Fabry-Perot filter. In the example of Fig. 2b, the piezo actuator 201 is used to move a dielectric component 211 into the resonator. In the illustrated example, the dielectric component 211 has a triangular shape and is inserted into the resonator cavity from the side (with respect to the propagation direction of the WDM signal 183). The dielectric component 211 changes the effective dielectric constant of the path of the light within the resonator. As such, the dielectric component 211 changes the effective length of the resonator cavity, thereby changing the wavelength of the peak of the transmittance function. Typically, the peak of the transmittance function depends on the physical path length and on the refractive index of the physical path. In particular, the peak of the transmittance function typically depends on the product of the refractive index and the physical path length, which is referred to as the optical path length (OPL) or the optical distance. Hence, the wavelength of the peak of the transmittance function may be modified by modifying the refractive index and/or by modifying the physical path length.

The downstream filter 170 of Fig. 2a (comprising the first reflective plate 203, the second reflector 202, the piezo actuator 201 and the dielectric component 211) is advantageous, as it may be implemented at relatively low cost and with a relatively low pin count. However, it may be challenging to maintain a standing wave within the resonator cavity using a dielectric component 211. In particular, it may be challenging to provide dielectric components 211 having a shape which allows maintaining a standing wave within a sufficiently large tuning range across the plurality of downstream wavelengths.

Fig. 2c shows another example of a BOSA 220 comprising a Fabry-Perot filter. In the example of Fig. 2c, the piezo actuator 201 is used to move a second reflective plate 221, in order to control the length 231 of the resonator cavity formed by the first reflective plate 203 and the second reflective plate 221. The second reflective plate 221 comprises a reflective surface which faces the reflective surface of the first reflective plate 203. The second reflective plate 221 is only partially mounted onto the piezo actuator 201, such that the optical downstream signal 182 at the particular (first) downstream wavelength can propagate towards the photodetector 162, after having left the resonator cavity. As such, the piezo actuator 162 may be used to modify the path length 231 of the resonator cavity without blocking the filtered optical signal at the output of the Fabry-Perot filter (i.e. at the output of the second reflective plate 221).

The range 232 within which the path length 231 of the resonator cavity may be modified typically depends on the characteristics of the piezo actuator 201 and/or on the voltage applied to the piezo actuator 201. As such, by changing the voltage applied to the piezo actuator 201, the path length 231 of the resonator cavity (i.e. the optical path length of the resonator cavity) may be changed.

By way of example, the default path length 231 of the resonator cavity may be d=300µm. The average wavelength of the peak of the transmittance function may be 1.577µm, such that the tuning distance is given by 300/1.577 = 190. Hence, the range 232 for modifying the path length 231 of the resonator cavity should be Δd=300/190=1.58µm. Typically, the displacement of a piezo actuator 201 depends on the thickness of the piezo actuator 201. By way of example, a piezo actuator 201 may be configured to provide a displacement 232 of about 0.1-1% of its thickness. Hence, a displacement 232 for modifying the length 231 of the resonator cavity in the range of 1.58µm may be achieved by using a piezo actuator 201 having a thickness in the range of 158 µm. Such piezo actuators 201 may be integrated into a BOSA 160 in a cost efficient manner, thereby providing cost efficient downstream filters 170 which are configured to be tuned across the complete range of the plurality of downstream wavelengths of the optical downstream signal 183.

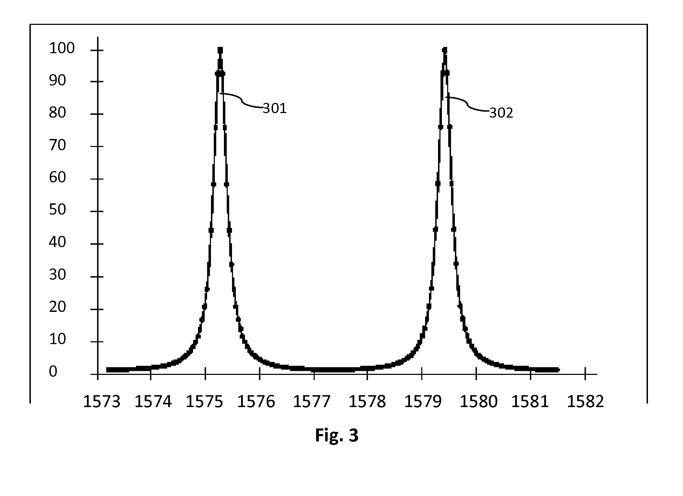

Fig. 3 shows an example transmittance function of a Fabry-Perot filter. The transmittance function comprises distinct peaks 301, 302, thereby isolating wavelengths corresponding to the peaks 301, 302. In the illustrated example, the wavelengths 1575nm and 1579nm are isolated. Hence, the Fabry-Perot filters may be used to provide a single wavelength signal 182 from the WDM downstream signal 183. Using the piezo actuator 201, the wavelength of the peaks 301, 302 may be tuned to a different wavelength of the WDM downstream signal 183. By doing this, cost efficient tunable BOSAs may be provided, which may be used in WDM-PONs.

The BOSAs described in the present document are advantageous as they provide for a low cost and high performance for downstream filtering in NGPON2. The described solution does not require high non-recurring expenses for preparing the manufacturing of the BOSA (e.g. wafer processing...), allows for a simple mechanical coupling to the light beam, and can be implemented using a low pin count.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A Receiver Optical Subassembly (160), referred to as ROSA, for a WDM-PON ONU (151, 152), the ROSA (160) comprising
- a downstream filter (170) configured to isolate a first optical downstream signal (182) at a first downstream wavelength from an optical WDM downstream signal (183) comprising a plurality of downstream wavelengths; wherein the downstream filter (170) comprises
- a first reflective plate (203) configured to let pass the optical WDM downstream signal (183) in a first propagation direction, and configured to reflect the optical WDM downstream signal (183) in a second propagation direction; wherein the second propagation direction is opposite to the first propagation direction;
- a second reflector (202, 221) configured to reflect the optical WDM downstream signal (183) in the first propagation direction; wherein the first reflective plate (203) and the second reflector (202, 221) form a resonator cavity having an optical path length (231); and
- path length modification means configured to modify the optical path length (231) of the resonator cavity to adjust a pass band of the downstream filter (170) to the first downstream wavelength; and
- a photodetector (162) configured to convert the first optical downstream signal (182) into an electrical signal.

2. The ROSA (160) of claim 1, wherein the path length modification means (201) comprise a piezo actuator.

3. The ROSA (160) of claim 2, wherein the optical path length (231) of the resonator cavity is modified by applying a voltage to the piezo actuator.

4. The ROSA (160) of any previous claim, wherein the path length modification means (201) are configured to move the second reflector (202, 221) towards the first reflective plate (203), thereby shortening the optical path length (231).

5. The ROSA (160) of any previous claim, wherein
- the second reflector (202, 221) comprises a second reflective plate (221) partially mounted onto the path length modification means (201);
- the path length modification means (201) are arranged between the second reflective plate (221) and the photodetector (162), without blocking the first optical downstream signal (182) exiting the resonator cavity via the second reflective plate (221); and
- the path length modification means (201) are configured to move the second reflective plate (221) towards the first reflective plate (203).

6. The ROSA (160) of any of claims 1 to 4, wherein
- the second reflector (202, 221) comprises a reflective coating (202) of the photodetector (162); and
- the path length modification means (201) are arranged to move the photodetector (162) comprising the reflective coating (202) towards the first reflective plate (203).

7. The ROSA (160) of any previous claim, wherein
- the path length modification means (201) are configured to insert a dielectric component (211) of varying width into the resonator cavity; and
- the varying width of the dielectric component (211) modifies the optical path length of the resonator cavity.

8. The ROSA (160) of claim 7, wherein the dielectric component (211) has a triangular shape.

9. The ROSA (160) of any previous claim, wherein the photodetector (201) comprises a photo diode.

10. The ROSA (160) of any previous claim, wherein the downstream filter (170) is configured to isolate any one of the plurality of downstream wavelengths by modifying the optical path length of the resonator cavity.

11. A Bidirection Optical Subassemly, referred to as BOSA, the BOSA comprising
- a laser (161) configured to emit an optical upstream signal (181) at an upstream wavelength;
- a ROSA (160) according to any previous claim, configured to isolate an optical downstream signal (182) at a first downstream wavelength from a WDM downstream signal (183) comprising a plurality of downstream wavelengths; and
- an upstream / downstream filter (163) configured to separate and/or merge the optical upstream signal (181) and the WDM downstream signal (183).

12. The BOSA of claim 11, wherein the upstream / downstream filter (163) is configured to
- let pass the optical upstream signal (181) propagating in an upstream direction; and
- reflect the WDM downstream signal (183) propagating in a downstream direction towards the photodetector (162) of the ROSA (160); wherein the downstream direction is opposite to the upstream direction.

13. The BOSA of any of claims 11 to 12, wherein
- the upstream wavelength lies in the range 1260 to 1280nm; and/or
- the plurality of downstream wavelengths lie in the range 1575 to 1580nm.

14. An Optical Network Unit (151, 152), referred to as ONU, for a WDM-PON, the ONU comprising
- a fiber interface configured to receive a drop fiber (141, 142) of the WDM-PON; wherein the drop fiber (141, 142) is configured to carry an optical WDM downstream signal (183) in a downstream propagation direction and an optical upstream signal (181) in an upstream propagation direction; and
- a BOSA (160) according to any of claims 11 to 13.

15. Use of a Fabry-Perot filter (201, 201, 202, 221) to adjustably isolate a WDM channel (182) from an optical WDM downstream signal (183) in an ONU (151) of a WDM-PON (100).

## Amended claims

### Amended claims in accordance with Rule 137(2) EPC.

**1.** A Receiver Optical Subassembly (160), referred to as ROSA, for a WDM-PON ONU (151, 152), the ROSA (160) comprising
- a downstream filter (170) configured to isolate a first optical downstream signal (182) at a first downstream wavelength from an optical WDM downstream signal (183) comprising a plurality of downstream wavelengths; wherein the downstream filter (170) comprises
- a first reflective plate (203) configured to let pass the optical WDM downstream signal (183) in a first propagation direction, and configured to reflect the optical WDM downstream signal (183) in a second propagation direction; wherein the second propagation direction is opposite to the first propagation direction;
- a second reflector (202, 221) configured to reflect the optical WDM downstream signal (183) in the first propagation direction; wherein the first reflective plate (203) and the second reflector (202, 221) form a resonator cavity having an optical path length (231); and
- path length modification means comprising a piezo actuator (201) configured to modify the optical path length (231) of the resonator cavity to adjust a pass band of the downstream filter (170) to the first downstream wavelength; and
- a photodetector (162) configured to convert the first optical downstream signal (182) into an electrical signal.

**2.** The ROSA (160) of claim 1, wherein the optical path length (231) of the resonator cavity is modified by applying a voltage to the piezo actuator.

**3.** The ROSA (160) of any previous claim, wherein the path length modification means (201) are configured to move the second reflector (202, 221) towards the first reflective plate (203), thereby shortening the optical path length (231).

**4.** The ROSA (160) of any previous claim, wherein
- the second reflector (202, 221) comprises a second reflective plate (221) partially mounted onto the path length modification means (201);
- the path length modification means (201) are arranged between the second reflective plate (221) and the photodetector (162), without blocking the first optical downstream signal (182) exiting the resonator cavity via the second reflective plate (221); and
- the path length modification means (201) are configured to move the second reflective plate (221) towards the first reflective plate (203).

**5.** The ROSA (160) of any of claims 1 to 3, wherein
- the second reflector (202, 221) comprises a reflective coating (202) of the photodetector (162); and
- the path length modification means (201) are arranged to move the photodetector (162) comprising the reflective coating (202) towards the first reflective plate (203).

**6.** The ROSA (160) of any previous claim, wherein
- the path length modification means (201) are configured to insert a dielectric component (211) of varying width into the resonator cavity; and
- the varying width of the dielectric component (211) modifies the optical path length of the resonator cavity.

**7.** The ROSA (160) of claim 6, wherein the dielectric component (211) has a triangular shape.

**8.** The ROSA (160) of any previous claim, wherein the photodetector (201) comprises a photo diode.

**9.** The ROSA (160) of any previous claim, wherein the downstream filter (170) is configured to isolate any one of the plurality of downstream wavelengths by modifying the optical path length of the resonator cavity.

**10.** A Bidirection Optical Subassemly, referred to as BOSA, the BOSA comprising
- a laser (161) configured to emit an optical upstream signal (181) at an upstream wavelength;
- a ROSA (160) according to any previous claim, configured to isolate an optical downstream signal (182) at a first downstream wavelength from a WDM downstream signal (183) comprising a plurality of downstream wavelengths; and
- an upstream / downstream filter (163) configured to separate and/or merge the optical upstream signal (181) and the WDM downstream signal (183).

**11.** The BOSA of claim 10, wherein the upstream / downstream filter (163) is configured to
- let pass the optical upstream signal (181) propagating in an upstream direction; and
- reflect the WDM downstream signal (183) propagating in a downstream direction towards the photodetector (162) of the ROSA (160); wherein the downstream direction is opposite to the upstream direction.

**12.** The BOSA of any of claims 10 to 11, wherein
- the upstream wavelength lies in the range 1260 to 1280nm; and/or
- the plurality of downstream wavelengths lie in the range 1575 to 1580nm.

**13.** An Optical Network Unit. (151,152), referred to as ONU, for a WDM-PON, the ONU comprising
- a fiber interface configured to receive a drop fiber (141, 142) of the WDM-PON; wherein the drop fiber (141, 142) is configured to carry an optical WDM downstream signal (183) in a downstream propagation direction and an optical upstream signal (181) in an upstream propagation direction; and
- a BOSA (160) according to any of claims 10 to 12.

**14.** Use of a Fabry-Perot filter (201, 201, 202, 221) comprising path length modification means including a piezo actuator (201) to adjustably isolate a WDM channel (182) from an optical WDM downstream signal (183) in an ONU (151) of a WDM-PON (100).
